(19) Europäisches Patentamt
European Patent Office
Office européen des brevets

(11) EP 2 103 426 B1

(12) # EUROPEAN PATENT SPECIFICATION

(45) Date of publication and mention of the grant of the patent:
**28.09.2011 Bulletin 2011/39**

(51) Int Cl.:
***B32B 27/32*** *(2006.01)* ***C08J 5/18*** *(2006.01)*
***C08K 5/00*** *(2006.01)*

(21) Application number: **08102825.0**

(22) Date of filing: **20.03.2008**

(54) **Blown Film**

Geblasene Folie

Film soufflé

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**23.09.2009 Bulletin 2009/39**

(73) Proprietor: **Borealis Technology OY
06101 Porvoo (FI)**

(72) Inventors:
- **Niedersüß, Peter
4312, Ried/Riedmark (AT)**
- **Wolfschwenger, Johannes
4491, Niederneukirchen (AT)**

(74) Representative: **Brunnbauer, Gerhard
Borealis Polyolefine GmbH
St.-Peter-Strasse 25
4021 Linz (AT)**

(56) References cited:
**EP-A- 0 369 658** **EP-A- 0 399 492**
**EP-A- 1 757 653** **CA-A1- 2 601 989**
**US-A- 5 310 584** **US-A- 5 594 070**
**US-A1- 2002 137 851**

- **M. FUJIYAMA: "Structure and Properties of Inflation Films of beta-Phase Nucleating Agent-Added Polypropylene" INTERN. POLYMER PROCESSING XI, 1996, page 159, XP009105074**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 103 426 B1

## Description

The invention relates to a blown film comprising a polypropylene composition containing a propylene homopolymer. The inventive film is particularly suitable for packaging applications.

## Technological background

Polypropylene films are used in many commercial applications. One particularly important application is the packaging of food products. Films employed in the food packaging industry are chosen and/or designed to provide characteristics necessary for proper food containment. Such characteristics include water vapour barrier properties, oxygen and gas barrier properties and flavour and aroma barrier properties. These improved barrier properties are advantageous also in non-food packaging applications, for example for the production of blister packages containing pharmaceutical products, detergents or other moisture-sensitive articles.

Good barrier properties are usually associated with highly oriented polypropylene films (e.g. BOPP). Biaxially oriented polypropylene films (BOPP) are known for their inherent moisture barrier properties, while non-oriented polypropylene films (e.g. cast films) have only a limited barrier function against water vapour and even less so against oxygen or carbon dioxide. In case of oriented films, these properties are greatly improved - however, at the price of significantly higher production costs and a certain brittleness as well as strongly anisotropic mechanical properties and shrinkage.

Blown films are taking up a medium position among polypropylene films with respect to their degree of orientation. The orientation degree of blown films is higher than that of cast films, but smaller than that of BOPP films. Also, blown films generally have already better moisture barrier properties than non-oriented films, but not so good moisture barrier properties than BOPP films.

For packaging applications it would be desirable to further increase the barrier properties of polypropylene blown films without altering the basic production method.

Accordingly, it is the object of the present invention to provide blown polypropylene films, which show good barrier properties.

By "good barrier properties" it is meant, that the water vapour transmission rate (determined under tropical conditions (38 °C, 90 % rel. humidity) according to DIN 53122/1) is lower than for a comparative prior art film.

The above object could be achieved by a non porous blown film comprising a polypropylene composition containing at least 80 wt% of a propylene homopolymer, where the polypropylene composition comprises one or more β-nucleating agents, under the proviso, that when the polypropylene composition contains propylene homopolymer as the only polymeric component and when the MFR (2.16 kg, 230°C) of the propylene homopolymer is 1.7 g/10 min, the blow-up ratio of the blown film is not 1.0.

M. Fujiyama, Structure and Properties of Inflation Films of β-Phase Nucleating Agent-Added Polypropylene, Intern. Polymer Processing XI (1996) 2, pp 159-166, discloses blown films from propylene homopolymer containing a β-nucleating agent. The β-nucleated propylene homopolymer has an MFR of 1.7 g/10 min. The blow-up ratio of the blown film is 1.0. This reference is silent about barrier properties of polypropylene blown films from β-nucleated polypropylene.

It is surprisingly observed, that films according to the invention show a significantly decreased water vapour transmission rate compared to a polypropylene blown film which does not contain any β-nucleating agent.

Generally, it is known from the art, that polypropylene films show a certain degree of anisotropy with respect to their mechanical properties. This means that the stiffness of a film (expressed as e.g. tensile modulus) in machine direction (MD) is different from the stiffness in transverse direction (TD). This is disadvantageous, because uniform film parameters would allow downgauging and material savings.

It has now surprisingly been observed that films according to the invention show a remarkably improved isotropy with respect to their stiffness. The ratio of $TM_{TD}/TM_{MD}$ (tensile modulus in transverse direction / tensile modulus in machine direction) is significantly closer to 1 compared to a film which does not contain any β-nucleating agent, but which is produced under otherwise identical conditions.

A further requirement for polypropylene films, which becomes increasingly important, is sterilisability. Sterilisability of a polypropylene film means how good the film retains its mechanical or optical properties or both after a sterilisation process. This requirement is particularly important for the area of pharmaceutical and food packaging.

It is known from the art, that the stiffness of films, which are subjected to a steam sterilisation, changes differently in machine direction compared to transverse direction.

It has now been observed, that the change of stiffness of a film according to the invention which has been steam sterilised (carried out at 121°C for 30 min) is much more uniform in machine direction and in transverse direction as it is with comparative films which do not contain any β-nucleating agent.

The polypropylene composition which is used for the blown films of the present invention contains one or more β-nucleating agents. β-Nucleating agents promote the crystallisation of polypropylene in the hexagonal β-modification.

If polypropylene does not contain any nucleating agents it crystallises in the monoclinic α-modification. Crystallisation in the α-modification may also be promoted by the addition of specific α-nucleating agents.

Suitable types of β-nucleating agents are

- dicarboxylic acid derivative type diamide compounds from $C_5$-$C_8$-cycloalkyl monoamines or $C_6$-$C_{12}$-aromatic monoamines and $C_5$-$C_8$-aliphatic, $C_5$-$C_8$-cycloaliphatic or $C_6$-$C_{12}$-aromatic dicarboxylic acids, e.g.
  - N,N'-di-$C_5$-$C_8$-cycloalkyl-2,6-naphthalene dicarboxamide compounds such as N,N'-dicyclohexyl-2,6-naphthalene dicarboxamide and N,N'-dicyclooctyl-2,6-naphthalene dicarboxamide,
  - N,N'-di-$C_5$-$C_8$-cycloalkyl-4,4-biphenyldicarboxamide compounds such as N,N'-dicyclohexyl-4,4-biphenyldicarboxamide and N,N'-dicyclopentyl-4,4-biphenyldicarboxamide,
  - N.N'-di-$C_5$-$C_8$-cycloalkyl-terephthalamide compounds such as N.N'-dicyclohexylterephthalamide and N,N'-dicyclopentylterephthalamide,
  - N,N'-di-$C_5$-$C_8$-cycloalkyl-1,4-cyclohexanedicarboxamide compounds such as N,N'-dicyclo-hexyl-1,4-cyclohexanedicarboxamide and N,N'-dicyclohexyl-1,4-cyclopentanedicarboxamide,
- diamine derivative type diamide compounds from $C_5$-$C_8$-cycloalkyl monocarboxylic acids or $C_6$-$C_{12}$-aromatic monocarboxylic acids and $C_5$-$C_8$-cycloaliphatic or $C_6$-$C_{12}$-aromatic diamines, e.g.
  - N.N'-$C_6$-$C_{12}$-arylene-bis-benzamide compounds such as N,N'-p-phenylene-bis-benzamide and N,N'-1,5-naphthalene-bis-benzamide,
  - N.N'-$C_5$-$C_8$-cycloalkyl-bis-benzamide compounds such as N,N'-1,4-cyclopentane-bis-benzamide and N,N'-1,4-cyclohexane-bis-benzamide,
  - N.N'-p-$C_6$-$C_{12}$-arylene-bis-$C_5$-$C_8$-cycloalkylcarboxamide compounds such as N,N'-1,5-naphthalene-bis-cyclohexanecarboxamide and N,N'-1,4-phenylene-bis-cyclohexanecarboxamide, and
  - N.N'-$C_5$-$C_8$-cycloalkyl-bis-cyclohexanecarboxamide compounds such as N,N'-1,4-cyclopentane-bis-cyclohexanecarboxamide and N,N'-1,4-cyclohexane-bis-cyclohexanecarboxamide,
- amino acid derivative type diamide compounds from amidation reaction of $C_5$-$C_8$-alkyl, $C_5$-$C_8$-cycloalkyl- or $C_6$-$C_{12}$-arylamino acids, $C_5$-$C_8$-alkyl-, $C_5$-$C_8$-cycloalkyl- or $C_6$-$C_{12}$-aromatic monocarboxylic acid chlorides and $C_5$-$C_8$-alkyl-, $C_5$-$C_8$-cycloalkyl- or $C_6$-$C_{12}$-aromatic mono-amines, e.g.
- N-phenyl-5-(N-benzoylamino)pentaneamide and N-cyclohexyl-4-(N-cyclohexylcarbonylamino)benzamide.

Further suitable β-nucleating agents are

- quinacridone type compounds, e.g. quinacridone, dimethylquinacridone and dimethoxyquinacridone,
- quinacridonequinone type compounds, e.g. quinacridonequinone, a mixed crystal of 5,12-dihydro(2,3b)acridine-7,14-dione with quino(2,3b)acridine-6,7,13,14-(5H,12H)-tetrone and dimethoxyquinacridonequinone and
- dihydroquinacridone type compounds, e.g. dihydroquinacridone, dimethoxydihydroquinacridone and dibenzodihydroquinacridone.

Still further suitable β-nucleating agents are

- salts of dicarboxylic acids with metals of group II of the periodic table, particularly salts of dicarboxylic acids with at least 7 carbon atoms with metals from group II of the periodic table, e.g. pimelic acid calcium salt and suberic acid calcium salt; and
- mixtures of dicarboxylic acids and salts of metals from group IIa of periodic system.

Still further suitable β-nucleating agents are

- salts of metals from group IIa of periodic system and imido acids of the formula

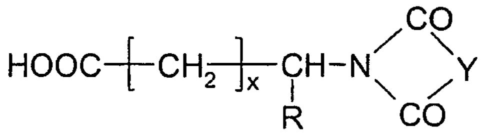

wherein x = 1 to 4; R = H, -COOH, $C_1$-$C_{12}$-alkyl, $C_5$-$C_8$-cycloalkyl or $C_6$-$C_{12}$-aryl, and Y = $C_1$-$C_{12}$-alkyl, $C_5$-$C_8$-cycloalkyl or $C_6$-$C_{12}$-aryl - substituted bivalent $C_6$-$C_{12}$-aromatic residues, e.g.
calcium salts of phthaloylglycine, hexahydrophthaloylglycine, N-phthaloylalanine and/or N-4-methylphthaloylglycine.

Especially suitable β-nucleating agents are any one or mixtures of N,N'-dicyclohexyl-2,6-naphtalene dicarboxamide, the β-nucleating agents of EP 177961 and those of EP 682066, the disclosure of which patent publications is incorporated herein by reference.

Preferred β-nucleating agents are N,N'-dicyclohexyl-2,6-naphthalene dicarboxamide, 5,12-dihydro-quino(2,3-b)acridine-7,14-dione, quino(2,3-b)acridine-6,7,13,14(5H,12H)-tetrone, salts of dicarboxylic acids with at least 7 carbon atoms with metals of group II of the periodic table, and mixtures thereof.

Such β-nucleating agents may be employed in amounts of from 0.0001 to 2.0 wt%, preferably 0.001 to 1.0 wt%, more preferably 0.003 to 0.3 wt% and most preferably 0.003 to 0.25 wt%, based on the weight of the final polypropylene composition. Preferred β-nucleating agents selected from quinacridone pigments illustrated above preferably are used in amounts of 0.001 to 0.01 wt%, such as 0.005 wt%, while other preferred β-nucleating agents selected among the Group II metal salts of dibasic carboxylic acids, such as pimelic acid calcium salt and suberic acid calcium salt are preferably employed in amounts of 0.05 to 0.3 wt%, such as 0.2 wt%.

It is particularly preferred for the present invention, that the β-nucleating agent comprises quino(2,3-b)acridine-6,7,13,14(5H,12H)-tetrone and 5,12-dihydro-quino(2,3-b)acridine-7,14-dione.

According to an alternative and still further preferred embodiment of the present invention, the β-nucleating agent comprises calcium pimelate or calcium suberate, especially preferred is calcium pimelate.

The polypropylene composition of the present invention may further comprise usual additives and auxiliary substances, e.g. 0.01 to 2.5 wt% of stabilizers, 0.01 to 1 wt% of processing aids, and 0.1 to 1 wt% of antistatic agents, antioxidants, acid neutralising agents, lubricants, ultraviolet absorbers, antiblocking agents, antifogging agents, etc.

According to the present invention, the polypropylene composition has a high amount of polypropylene crystallized in the β-modification. Preferably, the amount of β-crystallinity of the polypropylene composition is at least 40 %, more preferably at least 50%, still more preferably at least 60%, most preferably at least 75 %.

According to an embodiment of the present invention, the MFR of the propylene homopolymer is in the range of 0.2 to 10 g/10 min.

Preferably, the propylene homopolymer has an MFR of at least 0.5 g/10 min, more preferably of at least 1.0 g/10 min, still more preferably of at least 1.5 g/10 min, most preferably of at least 2.0 g/10 min.

Preferably, the propylene homopolymer has an MFR of not more than 9.0 g/10 min, more preferably of not more than 8.0 g/10 min, still more preferably of not more than 7.0 g/10 min, even more preferably of not more than 6.0 g/10 min and most preferably of not more than 5.0 g/10 min.

The polypropylene homopolymer which is used for the films of the present invention is isotactic polypropylene.

The isotacticity of polypropylene can be determined either by $^{13}C$-NMR or by Infrared spectroscopy. When it is determined by $^{13}C$-NMR, the isotacticity is determined as triade percentage (mm%) or as pentade percentage (mmmm%). For the used isotactic polypropylenes of the invention the triade percentage (mm%) is typically >80%, preferably >90%, still higher values (e.g. ≥95%) being still more preferred. Typically an isotactic polypropylene used for the present invention has a triade percentage (mm%) of up to 96%, preferably up to 97%, more preferably up to 98%, still more preferably up to 99% and most preferably up to 99.5%.

The propylene homopolymer which is used for the present invention contains essentially no comonomers other than propylene. However, small amounts of other comonomers may still be present in an amount of preferably not more than 1 wt%. Such a polypropylene is still considered as a propylene homopolymer in the context of this invention, when the effect of the β-nucleating agent on the water vapour transmission rate of a blown film produced therefrom is still observed. More preferably the propylene homopolymer does not contain more than 0.7 wt%, still more preferably not more than 0.5 wt%, most preferably not more than 0.3 wt% of comonomers, based on the total weight of monomers in the propylene homopolymer.

When the amount of comonomer is too high, the effect of β-nucleation on the barrier properties of the resultant blown film becomes small and can even be reversed.

If any comonomers are present, ethylene and/or 1-butene are preferred, particularly preferred is ethylene.

Accordingly, a typical propylene homopolymer within the scope of the invention may comprise up to 0.7 wt% of ethylene, more preferably up to 0.5 wt% of ethylene. A particularly preferred propylene homopolymer used for the invention contains up to 0.3 wt% of ethylene.

According to the invention, a polypropylene composition is used, which composition contains at least 80 wt%, more preferably at least 90 wt%, still more preferably at least 95 wt% propylene homopolymer, based on the sum of the weights of all polymeric components of the polypropylene composition. A particularly preferred polypropylene composition contains propylene homopolymer as the only polymeric component.

The blown films of the invention are non porous.

According to a further embodiment of the invention, the blown film of the invention comprises at least one of the layers of a two- or multi-layered film.

The further layer(s) of a two- or multi-layered blown film, according to further embodiments may comprise a polymer which has a higher melting temperature than the polypropylene of the first layer.

The materials of the further layers can positively contribute to the mechanical properties of the total film. If the outer layers of a multilayer blown film comprise polymers having a higher melting temperature than the polypropylene of the first layer, such films can also be produced with less die deposits around the extrusion die.

The polymers having a higher melting temperature than polypropylene, which are used for the two- or multilayer blown films, are preferably any one or more of polyamide, polyvinylalcohol and polyethylene terephthalate.

According to a further embodiment of the invention a two- or multi-layer blown film comprises at least two layers, wherein at least one further layer is comprised of an ethylene polymer.

In areas, where low seal initiation temperature (SIT) in combination with good mechanical properties is required, it has been found, that combinations of polypropylenes with polyethylenes (e.g. C4-LLDPE or LDPE) are beneficial. Compared to PE, PP has high temperature resistance while PE has low SIT. For fast sealing process on packaging lines, high sealing temperatures are used. Consequently, this requires a film with a top layer (the layer, which has direct contact to the sealing bars) having a high melt temperature in order to withstand the high sealing temperatures and a sealing layer with a very low melting temperature which starts sealing at lowest possible temperature and providing good seam strength. Such film properties can be achieved by a combination of PP for the top layer and PE for the sealing layer.

Multilayer films of the invention may further have an adhesive layer between a polypropylene layer and a further layer comprising e.g. an ethylene polymer.

In the case of conventional PE, an adhesive layer is required between those layers in order to give sufficient bonding strength between the PP and PE layer since PP and conventional PE have different polarities and therefore not sufficient adhesion.

According to an advantageous embodiment, the ethylene polymer of the further layer is a single site catalyst polyethylene (SSC-PE).

By using a single site catalyst PE (SSC-PE) which has a low density (below 0.920 g/$cm^3$) instead of a standard PE, a good adhesion to PP is obtained and no extra adhesive layer between the PP- and PE-layer is necessary.

Blown films according to the invention may be produced by any one of the blown-film processes known in the art. These technologies are generally known to the person skilled in the art. A brief description is also contained in Films, Manufacture; E.M. Mount III; Encyclopedia Of Polymer Science and Technology, © 2002; John Wiley & Sons, Inc.; Vol. 6; page 299*; DOI: 10. 1002/0471440264.pst132.*

The films of the present invention are preferably produced by first extruding the polypropylene composition through a circular die, followed by "bubble-like" expansion. The blown films according to this invention are for example produced on a single screw extruder with a barrel diameter of 70 mm and a round-section die of 200 mm with 1 mm die gap in combination with a monolip cooling ring and internal bubble cooling (IBC). Melt temperature is preferably 210 °C in the die; the temperature of the cooling air is kept preferably at 15 °C and the blow up ratio (BUR) is preferably 3:1. Moreover it is preferred that a film thickness of 40 μm is adjusted through the ratio between extruder output, takeoff speed and BUR.

Blown films according to the invention are preferably produced with a blow-up ratio of 1.1 or more. More preferably, a typical blow up ratio of the inventive blown film is ≥ 1.5, still more preferably the blow-up ratio is ≥ 2.0, most preferably ≥ 2.5. Typical upper limits for blow-up ratio of the inventive film is 4.0, more preferably 3.5, most preferably 3.0.

Since with increasing blow up ratios (BUR) also the orientation of the film increases, a certain BUR shall not be exceeded. If BUR is too high, recrystallisation effects may occur, thereby decreasing the content of β-modification. Due to the same effect, the film may even become porous.

**Measurement Methods**

**Water vapour transmission rate WVTR**

Water vapour transmission rates are determined under tropical conditions (38 °C, 90 % rel. humidity) according

to DIN 53122/1.

Water vapour transmission rates are determined on 40 μm blown films.

**Tensile Modulus**

The tensile modulus was determined in machine and transverse direction on 40 μm thick blown films according to ISO 527-2.

**Melt flow rate**

The melt flow rate is determined according to ISO 1133 and it is indicated in g/10 min. The MFR is an indication of the flowability and thus the processability of the polymer. The higher the melt flow rate, the lower the viscosity of the polymer. The MFR of polypropylene compositions and propylene polymers is measured with a load of 2.16 kg at 230 °C.

**Impact Strength**

Impact Strength is determined on Dart-drop (g/50%). Dart-drop is measured using ISO 7765-1, method "A". A dart with a 38 mm diameter hemispherical head is dropped from a height of 0.66 m onto a film sample clamped over a hole. If the specimen fails, the weight of the dart is reduced and if it does not fail the weight is increased. At least 20 specimens are tested. The weight resulting in failure of 50% of the specimens is calculated and this provides the dart drop impact (DDI) value (g).

**Determination of β-crystallinity**

The β-crystallinity was determined by Differential Scanning Calorimetry (DSC). DSC was run according to ISO 3146 / part 3 / method C2 with a scan rate of 10 °C/min. The amount of β-modification was calculated from the second heat by the following formula:

$$\beta\text{-area} / (\alpha\text{-area} + \beta\text{-area})$$

Since the thermodynamically instable β-modification starts to be changed into the more stable α-modification at temperatures above 150 °C, a part of the β-modification is transferred within the heating process of DSC-measurement. Therefore the amount of β-PP determined by DSC is lower as when measured according to the method of Turner-Jones by WAXS (A. Turner-Jones et. al., Makromol. Chem 75 (1964) 134).

"Second heat" means, that the sample is heated according to ISO 3146 / part 3 /method C2 for a first time and then cooled to room temperature at a rate of 20 °C/min. The sample is then heated a second time, also according to ISO 3146 / part 3 / method C2. This second heat is relevant for measurement and calculation.

During the "first heat" all thermal history of the sample giving rise to different crystalline structure, which typically comes from different processing conditions and/or methods, is destroyed. By using the second heat for determination of β-crystallinity, it is possible to compare samples regardless of the way the samples were originally manufactured.

**Examples**

Materials

**P1:** propylene homopolymer with MFR 3.2 g/10 min (2.16 kg/230 °C) and containing 0.06 wt% Pentaerythrityl-tetrakis(3-(3',5'-di-tert. butyl-4-hydroxyphenyl)-propionate and 0.06 wt% Bis(2,4-dicumylphenyl)pentaerythritol diphosphite and 0.02 wt% synthetic hydrotalcite (SHT).

**P2:** as P1, but additionally containing 0.20 wt% Calciumpimelate as β-nucleating agent.

Blown films were produced on a single screw extruder with a barrel diameter of 70 mm and a round-section die of 200 mm with 1 mm die gap in combination with a monolip cooling ring and internal bubble cooling (IBC). Melt temperature was 210 °C in the die; the temperature of the cooling air was kept at 15 °C and the blow up ratio (BUR) 3: 1. A film thickness of 40 μm was adjusted through the ratio between extruder output, takeoff speed and BUR.

Mechanical properties (Tensile Modulus and Dart Drop Impact) and water vapour transmission rate were measured on the produced films. The films were also subjected to a steam sterilisation treatment and the Tensile Moduli of the films were measured again.

Results:

| | Parameter | Unit | P2 | P1 |
|---|---|---|---|---|
| Tensile Test TD | TENSILE MODULUS | MPa | 1382.61 | 1583.15 |
| Tensile Test MD<br>DDI | TENSILE MODULUS<br>F50 | MPa<br>g | 1366.85<br>65 | 1740.85<br>25 |
| WVTR | trop. Conditions | $g/m^2/24h$ | 3.7 | 4.68 |
| sterilised: | | | | |
| Tensile Test TD | TENSILE MODULUS | MPa | 1273.66 | 1548.52 |
| Tensile Test MD | TENSILE MODULUS | MPa | 1231.77 | 1536.95 |

## Claims

1. Non porous blown film comprising a polypropylene composition containing at least 80wt% of a propylene homopolymer, **characterised in that** the polypropylene composition comprises one or more β-nucleating agents, under the proviso, that when the polypropylene composition contains propylene homopolymer as the only polymeric component and when the MFR (2.16 kg, 230 °C, determined according to ISO 1133) of the propylene homopolymer is 1.7 g/10 min, the blow-up ratio of the blown film is not 1.0.

2. Blown film according to claim 1, **characterised in that** the β-nucleating agent is selected from the group consisting of N,N'-dicyclohexyl-2,6-naphthalene dicarboxamide, 5,12-dihydro-quino(2,3-b)acridine-7,14-dione, quino(2,3-b)acridine-6,7,13,14(5H,12H)-tetrone, salts of dicarboxylic acids with at least 7 carbon atoms with metals of group II of the periodic table, and mixtures thereof.

3. Blown film according to any one of the preceding claims, **characterised in that** the β-nucleating agent comprises quino(2,3-b)acridine-6,7,13,14(5H,12H)-tetrone and 5,12-dihydro-quino(2,3-b)acridine-7,14-dione.

4. Blown film, according to any one of the preceding claims, **characterised in that** the β-nucleating agent comprises calcium pimelate or calcium suberate.

5. Blown film according to any one of the preceding claims, **characterised in that** the amount of β-modification of the polypropylene composition is ≥ 40 % (determined by DSC according to ISO 3146 / part 3 / method C2 with a scan rate of 10 °C/min).

6. Blown film according to any one of the preceding claims, **characterised in that** the MFR of the propylene homopolymer is from 0.2 to 10 g/10 min (2.16 kg, 230 °C, determined according to ISO 1133).

7. Blown film according to any one of the preceding claims, **characterised in that** it comprises at least one of the layers of a two- or multi-layered film.

8. Blown film according to any one of the preceding claims, **characterised in that** the blow-up ratio of the blown film is ≥1.1.

## Patentansprüche

1. Porenfreie Blasfolie, die eine Polypropylen-Zusammensetzung umfaßt, welche mindestens 80 Gewichts-% eines Propylen Homopolymers enthält, **dadurch gekennzeichnet, dass** die Polypropylen-Zusammensetzung ein oder mehrere β-Nukleierungsmittel umfaßt, mit der Maßgabe, dass wenn die Polypropylen-Zusammensetzung Propylen Homopolymer als die einzige polymere Komponente enthält und wenn der MFR (2,16 kg, 230 °C, bestimmt gemäß ISO 1133) des Propylen Homopolymers 1,7 g/10 Min. ist, die Aufblasrate der Blasfolie nicht 1,0 ist.

2. Blasenfolie gemäß Anspruch 1, **dadurch gekennzeichnet, dass** das β-Nukleierungsmittel ausgewählt ist aus der Gruppe bestehend aus N,N'-Dicyclohexyl-2,6-naphtalin-dicarboxamid, 5,12-Dihydro-quino(2,3-b)acridin-7,14-dion, Quino(2,3-b)acridin-6,7,13,14(5H,12H)-tetron, Salzen von Dicarboxylsäuren mit mindestens 7 Kohlen-stoffatomen mit Metallen der Gruppe II des Periodensystems, und Mischungen davon.

3. Blasfolie gemäß einem der vorstehenden Ansprüche, **dadurch gekennzeichnet, dass** das β-Nukleierungsmittel Quino(2,3-b)acridin-6,7,13,14(5H,12H)-tetron und 5,12-Dihydro-quino(2,3-b)acridin-7,14-dion umfasst.

4. Blasfolie gemäß einem der vorstehenden Ansprüche, **dadurch gekennzeichnet, dass** das β-Nukleierungsmittel Kalziumpimelat oder Kalziumsuberat umfasst.

5. Blasfolie gemäß einem der vorstehenden Ansprüche, **dadurch gekennzeichnet, dass** die Menge der β-Modifizierung der Polypropylenzusammensetzung ≥ 40 (bestimmt durch DSC gemäß ISO 3146/Teil 3/Methode C2 mit einer Scanrate von 10 °C/Min.) ist.

6. Blasfolie gemäß einem der vorstehenden Ansprüche, **dadurch gekennzeichnet, dass** die MFR des Polypropylen Homopolymers bei 0,2 bis 10g/10 Min. (2,16 kg, 230 °C, bestimmt gemäß ISO 1133) liegt.

7. Blasfolie gemäß einem der vorstehenden Ansprüche, **dadurch gekennzeichnet, dass** sie mindestens eine Schicht einer zwei- oder mehrschichtigen Folie umfasst.

8. Blasfolie gemäß einem der vorstehenden Ansprüche, **dadurch gekennzeichnet, dass** das Aufblasverhältnis der Blasfolie ≥ 1,1 ist.

## Revendications

1. Film soufflé non poreux comprenant une composition de polypropylène contenant au moins 80 % en poids d'un homopolymère de propylène, **caractérisé en ce que** la composition de polypropylène comprend un ou plusieurs agents de β-nucléation, à la condition que, quand la composition de polypropylène contient un homopolymère de propylène en tant que composant polymère unique et quand l'indice de fluidité MFR (2,16 kg, 230 °C, déterminé selon ISO 1133) de l'homopolymère de propylène est de 1,7 g/10 min, le taux de soufflage du film soufflé ne soit pas de 1,0.

2. Film soufflé selon la revendication 1, **caractérisé en ce que** l'agent de β-nucléation est choisi dans le groupe composé du N,N'-dicyclohexyl-2,6-naphtalènedicarboxamide, de la 5,12-dihydro-quino(2,3-b)acridine-7,14-dione, de la quino(2,3-b)acridine-6,7,13,14(5H,12H)-tétrone, de sels d'acides dicarboxyliques ayant au moins 7 atomes de carbone avec des métaux du groupe II du tableau périodique, et des mélanges de ceux-ci.

3. Film soufflé selon l'une quelconque des revendications précédentes, **caractérisé en ce que** l'agent de β-nucléation comprend de la quino(2,3-b)acridine-6,7,13,14(5H,12H)-tétrone et de la 5,12-dihydroquino(2,3-b)acridine-7,14-dione.

4. Film soufflé selon l'une quelconque des revendications précédentes, **caractérisé en ce que** l'agent de β-nucléation comprend du pimélate de calcium ou du subérate de calcium.

5. Film soufflé selon l'une quelconque des revendications précédentes, **caractérisé en ce que** la quantité de la modification β de la composition de polypropylène est ≥ 40 % (déterminée par ACD selon ISO 3146/partie 3/méthode C2, avec une vitesse de balayage de 10°C/min).

6. Film soufflé selon l'une quelconque des revendications précédentes, **caractérisé en ce que** l'indice de fluidité MFR de l'homopolymère de propylène est de 0,2 à 10 g/10 min (2,16 kg, 230 °C, déterminé selon ISO 1133).

7. Film soufflé selon l'une quelconque des revendications précédentes, **caractérisé en ce qu'**il comprend au moins l'une des couches d'un film bicouche ou multicouche.

8. Film soufflé selon l'une quelconque des revendications précédentes, **caractérisé en ce que** le taux de soufflage du film soufflé est ≥ 1,1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 177961 A
- EP 682066 A


### Non-patent literature cited in the description


- **M. Fujiyama.** Structure and Properties of Inflation Films of β-Phase Nucleating Agent-Added Polypropylene. *Intern. Polymer Processing XI,* 1996, vol. 2, 159-166
- Films, Manufacture. **E.M. Mount III.** Encyclopedia Of Polymer Science and Technology. John Wiley & Sons, Inc, 2002, vol. 6, 299
- **A. Turner-Jones.** *Makromol. Chem,* 1964, vol. 75, 134